# DEMANDE DE BREVET EUROPEEN

(11) **EP 1 847 329 A1**
(43) Date de publication de la demande: **24.10.2007**
(21) Numéro de dépôt: 07105522.2
(22) Date de dépôt: 03.04.2007
(51) Int. Cl.: B09C 1/00, B09C 1/08, B09C 1/10

(54) **Procédé de réhabilitation de sols et/ou des eaux souterraines et equipement pour la mise en oeuvre de ce procédé**

(30) Priorité: 06.04.2006 FR 0651241
(71) Demandeur: Compagnie du Sol, 92000 Nanterre (FR)
(72) Inventeur: Ille,Christian, 92000 Nanterre (FR); Kachrillo, Jean-Jacques, 92000 Nanterre (FR)
(74) Mandataire: Dronne, Guy

(57) **Abrégé**

L'invention concerne un procédé de réhabilitation de sols et/ou des eaux souterraines dans un volume de sol pollué. Le procédé comporte les étapes suivantes :
- on déplace dans le volume un outil de forage (18) apte à découper le sol et à le malaxer de manière homogène dans ledit volume ; et simultanément au malaxage, on injecte (G) dans le sol malaxé à l'aide dudit outil un agent de traitement afin que ledit agent de traitement soit dispersé de manière homogène dans le volume, ledit agent de traitement comprenant au moins un des agents suivants : un fluide gazeux non uniquement chimiquement réactif ; un agent réactif chimique constitué d'une substance chimique oxydante réductrice ou neutralisante ; et un agent réactif constitué de population de micro-organismes ou d'un substrat de développement de micro-organismes ;
par quoi on obtient une réhabilitation in situ du sol et/ou des eaux souterraines.

## Description

La présente invention a pour objet un procédé de réhabilitation de sols et/ou des eaux souterraines dans un volume de sol pollué, et un équipement pour la mise en oeuvre de ce procédé.

Le traitement des pollutions organiques et métalliques des sols et des eaux souterraines d'origine anthropique ou naturelle présentant un caractère de dangerosité jugé inacceptable est généralement réalisé soit in situ, soit hors du sol.

Le traitement hors du sol fait suite à une phase d'extraction de la nappe polluée ou de la matrice de sol pollué. La phase de traitement nécessite la mise en oeuvre hors du sol (sur le site ou hors du site) de procédés physiques, chimiques ou biologiques de traitement. L'extraction d'eau souterraine polluée ou de sol pollué présente des difficultés particulières telles que la maîtrise de l'extraction sélective des polluants. En effet, les polluants présents dans le sous-sol se diluent soit au contact des sols par adsorption et se déplacent en profondeur par gravité, soit dans les eaux souterraines en se déplaçant par convection et diffusion (évolution spatiale et temporelle). Il en résulte une quantité de matériaux pollués sous forme liquide ou solide parfois très importante, ce qui rend les opérations d'extraction techniquement difficiles à réaliser, longues et coûteuses.

Compte tenu des problèmes que pose le traitement hors sol du sol pollué, un premier objet de l'invention est de fournir un procédé de réhabilitation de sol et/ou des eaux souterraines dans un volume de sol pollué qui soit réalisé in situ et qui présente la même efficacité que les traitements hors sol mais qui soit d'un coût inférieur.

Pour atteindre ce but, selon l'invention, le procédé de réhabilitation de sols et/ou des eaux souterraines dans un volume de sol pollué, se caractérise en ce qu'il comporte les étapes suivantes :
- on déplace dans ledit volume un outil de forage apte à découper le sol et à le malaxer de manière homogène dans ledit volume ; ledit outil de forage étant choisi dans le groupe comprenant des outils de forage à axe de rotation horizontal et à déplacement vertical et des outils de forage à éléments de découpe à déplacement sensiblement vertical, le déplacement de l'outil étant horizontal ; et simultanément au malaxage ;
- on injecte dans le sol malaxé à l'aide dudit outil un agent de traitement de telle manière que, durant le malaxage, ledit agent de traitement soit dispersé de manière homogène dans le volume, ledit agent de traitement comprenant au moins un des agents suivants aptes à agir sur les éléments polluants :
- un fluide gazeux non uniquement chimiquement réactif ;
- un agent réactif chimique constitué d'une substance chimique oxydante réductrice ou neutralisante ; et
- un agent réactif constitué de population de micro-organismes ou d'un substrat de développement de micro-organismes ;
par quoi on obtient une réhabilitation in situ du sol et/ou des eaux souterraines.

On comprend que, grâce au déplacement dans le volume à traiter de l'outil de forage apte à malaxer le sol de manière homogène et qui simultanément permet l'injection dans le sol malaxé d'un agent de traitement de telle manière que, durant le malaxage, l'agent de traitement soit dispersé de manière homogène dans le volume, on peut obtenir dans ce volume un contact étroit entre l'agent de traitement et le sol ou l'eau à traiter, et donc un traitement efficace.

Ce malaxage du sol découpé et le mélange efficace avec l'agent de traitement est obtenu notamment grâce aux types d'outils de forage utilisés.

En outre, du fait du déplacement de l'outil, on peut traiter des volumes de sol relativement importants.

Selon un premier mode de mise en oeuvre du procédé, le déplacement de l'outil est vertical et les éléments de découpe sont rotatifs autour d'axes horizontaux. On obtient ainsi un volume de sol traité qui a la forme d'un parallélépipède rectangle et dont la profondeur peut être relativement importante.

Selon un deuxième mode de mise en oeuvre, le déplacement de l'outil est horizontal et les éléments de découpe sont déplacés sensiblement verticalement. Dans ce mode de mise en oeuvre, il est possible d'obtenir le traitement du sol sur une longueur relativement importante mais sur une profondeur plus réduite.

Dans les deux cas, le volume de sol traité a la forme sensiblement d'un parallélépipède rectangle ou d'une pluralité de parallélépipèdes rectangles reliés entre eux.

De préférence, une enveloppe d'étanchéité est disposée au-dessus de la surface du sol au droit de la zone en cours de traitement pour récupérer les gaz s'échappant du sol.

Un second objet de l'invention est de fournir un équipement pour la réhabilitation de sol et/ou d'eaux souterraines dans un volume de sol pollué notamment mais non exclusivement pour la mise en oeuvre du procédé défini ci-dessus.

Selon l'invention, l'équipement pour la réhabilitation de sols et/ou d'eaux souterraines dans un volume de sol pollué, se caractérise en ce qu'il comprend :
- une machine équipée d'un outil de forage pour découper dans ledit volume le sol et pour malaxer le sol de manière homogène dans ledit volume, ledit outil comprenant en outre des moyens pour injecter un agent de traitement de telle manière que durant le malaxage, ledit agent de traitement soit dispersé de manière homogène dans le volume ;
- des moyens pour alimenter en agent de traitement lesdits moyens d'injection ;
- des moyens pour déplacer ledit outil de forage de préférence selon une direction horizontale ou verticale ; et
- des moyens formant enveloppe d'étanchéité aptes à être disposés à la surface du sol en regard de la zone du sol en cours de traitement à l'aide de l'outil de forage, ledit outil de forage étant choisi dans le groupe comprenant des outils de forage à axe de rotation horizontal et à déplacement vertical et des outils de forage à éléments de découpe à déplacement sensiblement vertical, le déplacement de l'outil étant horizontal.

De préférence, lorsque l'agent de traitement est gazeux, ladite enveloppe comporte en outre des moyens de soutirage des gaz s'échappant de la zone de terrain en cours de traitement.

Selon un premier mode de mise en oeuvre, ledit outil de forage comprend deux paires de fraises rotatives à axes horizontaux.

Selon un deuxième mode de mise en oeuvre, ledit élément de découpe de l'outil de forage est une chaîne sans fin sensiblement verticale portant des dents de découpe.

D'autres caractéristiques et avantages de l'invention apparaîtront mieux à la lecture de la description qui suit de plusieurs modes de mise en oeuvre de l'invention donnés à titre d'exemples non limitatifs. La description se réfère aux figures annexées sur lesquelles :
- la figure 1 montre l'utilisation d'un premier outil de forage pour la mise en oeuvre du procédé de traitement dans le cas de l'utilisation comme agent de traitement d'un gaz ;
- la figure 2 illustre l'utilisation du même outil de forage dans le cas où l'agent de traitement est une substance chimique ;
- la figure 3 illustre l'utilisation d'un deuxième type d'outil de forage dans le cas où l'agent de traitement est un gaz ; et
- la figure 4 illustre l'utilisation du deuxième type d'outil de forage dans le cas où l'agent de traitement est une substance chimique.

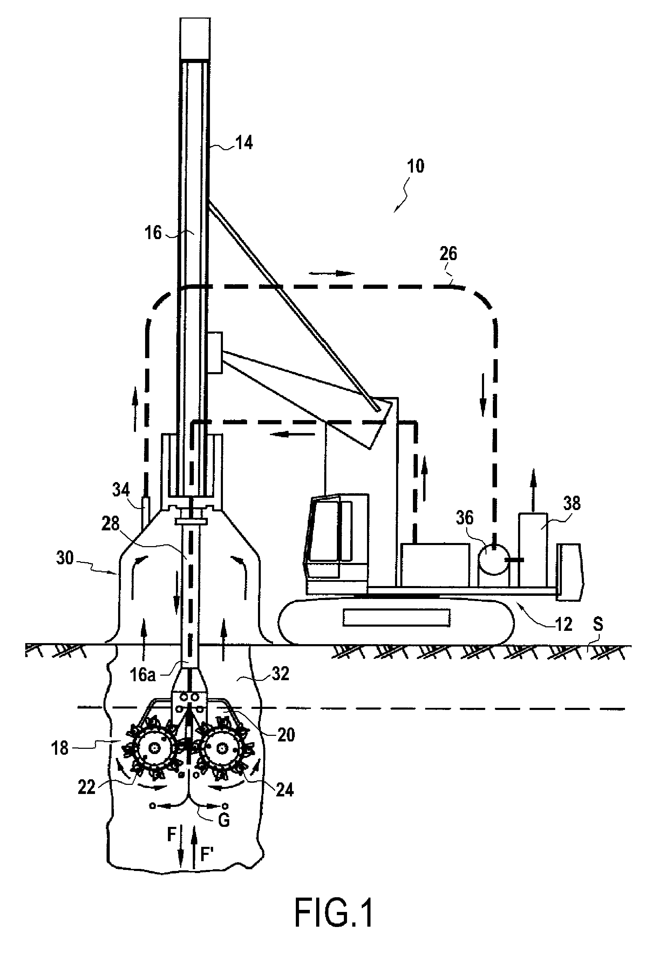

En se référant tout d'abord à la figure 1, on va décrire un premier équipement pour la mise en oeuvre du procédé de traitement dans le cas où le déplacement de l'outil de forage est vertical et où l'agent de traitement est un gaz.

L'équipement 10 comprend un porteur à chenille 12 reposant sur la surface du sol S. Ce porteur supporte un mât de guidage vertical 14 pour provoquer le déplacement vertical d'une barre de guidage 16. A l'extrémité inférieure 16a de la barre de guidage est fixé l'outil de forage proprement dit 18. Dans ce premier mode de réalisation, l'outil de forage 18 comporte essentiellement une structure support 20 et deux paires de fraises rotatives 22 et 24 dont les axes parallèles sont horizontaux. Sous l'effet des déplacements de la barre de guidage 16, l'outil 18 peut être animé d'un déplacement vertical ascendant ou descendant illustré par les flèches F et F'. L'équipement comporte également des conduites 26 d'alimentation en gaz de traitement. Ces conduites sont prolongées dans la barre de guidage 18 par des tubes 28 et se terminent par des buses d'injection montées sur le support 20 de l'outil 18 et symbolisées par la flèche G sur la figure 1. De préférence, il y a plusieurs buses pour avoir une injection plus homogène dans le sol malaxé. Ces buses sont au moins disposées à la partie inférieure du support 20 entre les paires de fraises. L'équipement comporte en outre une jupe ou enveloppe d'étanchéité 30 qui est disposée à la surface du sol S au droit de la zone de sol en cours de traitement 32. Cette jupe d'étanchéité est suspendue par la pièce 34 au mât de guidage 14.

Les mouvements de montée et de descente de l'outil 18 permettent de forer un volume de forme sensiblement parallélépipédique dont la profondeur peut être relativement importante. Les fraises 22, 24 assurent non seulement la découpe du sol mais également le malaxage de celui-ci. L'injection concomitante du gaz de traitement permet de réaliser, en contrôlant convenablement le déplacement de l'outil 18, une mise en contact intime entre le sol découpé et malaxé et le gaz de traitement de telle manière qu'on obtienne une mise en contact homogène de l'ensemble du sol découpé. L'enveloppe ou jupe d'étanchéité 30 est également munie vers son extrémité supérieure d'un orifice d'extraction 34 pour récupérer le gaz qui s'échappe du volume dans lequel il est injecté. L'orifice d'extraction 34 est relié à un extracteur d'air 36 et à un filtre 38 qui permet de retenir le polluant extrait par le gaz de traitement et de favoriser le rejet à l'atmosphère de l'air purifié.

Le gaz utilisé peut être un gaz non uniquement chimiquement réactif tel que l'air, l'azote ou les gaz rares. Ce gaz provoque un transfert des composés organiques volatils présents sous forme adsorbée sur la matrice solide et sous forme liquide ou dissoute dans l'eau souterraine vers la phase gazeuse qui est extraite du sous-sol par l'orifice d'extraction 34. Le sol est ainsi "stripé" et est donc débarrassé des composés organiques volatils qui le polluent.

Le gaz de traitement peut également être un gaz chimiquement actif oxydant, réducteur ou neutralisant pour provoquer la transformation du polluant présent dans le sol en substance non dangereuse. Ce gaz peut être de l'ozone ou du chlore.

Il va de soi que dans ce mode de mise en oeuvre, le porteur 12 peut se permettre de réaliser plusieurs déplacements verticaux adjacents de l'outil afin de provoquer le traitement de plusieurs zones parallélépipédiques rectangles juxtaposées.

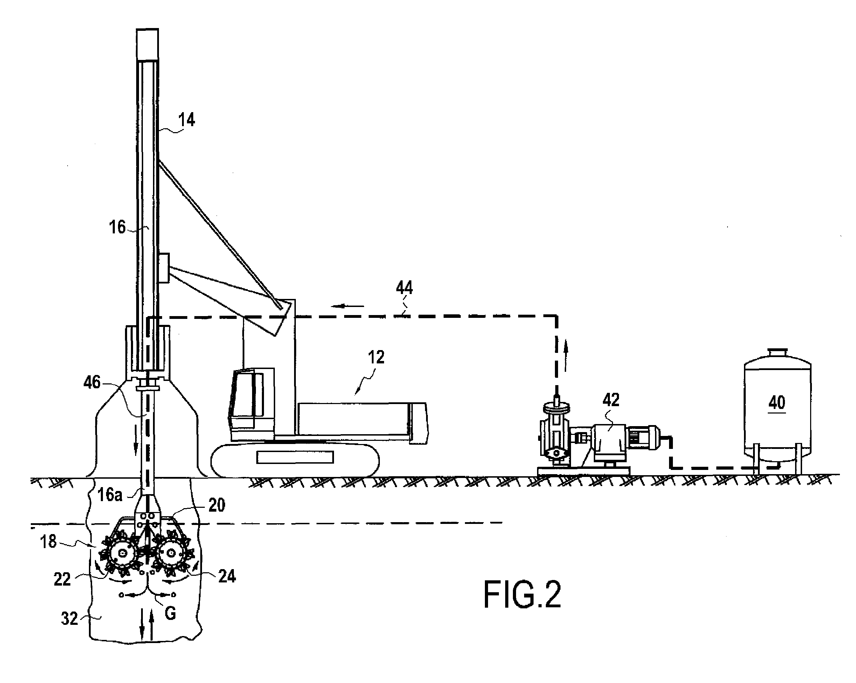

Sur la figure 2, on a représenté un deuxième exemple d'utilisation du même outil de forage pour réaliser un traitement du sol ou des eaux souterraines à l'aide d'un agent de traitement liquide. Pour ce faire, l'installation comprend en outre une cuve 40 de stockage de la substance chimique, une pompe d'injection 42 qui transmet par la conduite 44 le liquide de traitement sous pression à la conduite d'alimentation 46 ménagée dans la barre de guidage 16. Bien entendu, dans ce cas il n'est pas nécessaire de prévoir de système d'extraction de gaz. L'agent de traitement peut être également constitué par une population de micro-organismes contenus dans un liquide convenable ou un substrat de développement de tels micro-organismes. Le "bio-réacteur" ainsi réalisé dans le sol permet la mise en contact direct de micro-organismes épurateurs avec les substances polluantes en place.

Cet outil est bien adapté au cas où le volume de terrain à traiter présente une profondeur relativement importante puisqu'il est aisé d'utiliser un nombre de barre de guidage adapté à la profondeur de terrain à forer et à traiter.

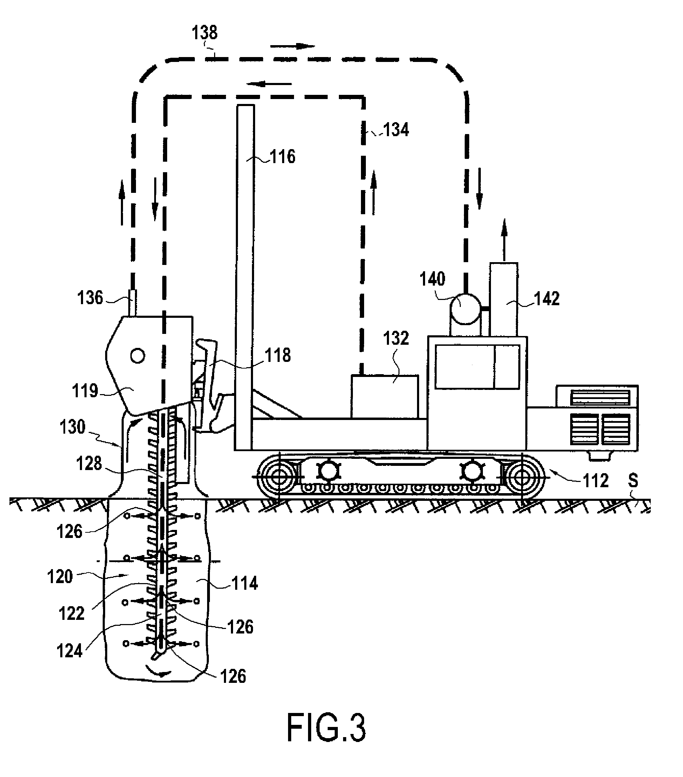

Sur la figure 3, on a illustré la mise en oeuvre du procédé dans le cas où on utilise un outil de forage à déplacement horizontal et où l'agent de traitement est un gaz.

Sur cette figure, on retrouve le porteur 112 reposant sur le sol S à proximité de la zone 114 en cours de traitement. Le porteur 112 supporte un mât vertical de guidage 116 le long duquel peut se déplacer un chariot 118, chariot sur lequel est montée une tête de mise en mouvement 119 de l'outil de coupe 120. L'outil de coupe 120 qui est déplacé horizontalement est, par exemple, constitué par une chaîne sans fin 122 sensiblement verticale qui est entraînée par la tête de mise en mouvement 119. La chaîne sans fin 122 porte des dents dont le déplacement sensiblement vertical permet la découpe du sol et son malaxage. Le support 124 de la chaîne sans fin est équipé de buses d'injection 126 régulièrement réparties pour injecter le gaz de traitement et alimentées par la conduite 128. L'équipement comporte également une jupe ou enveloppe d'étanchéité 130 qui est disposée à la surface du sol en regard de la zone 114 en cours de traitement. Cette jupe 130 est par exemple suspendue à la tête de mise en mouvement 119. L'équipement comporte bien sûr un compresseur 132 pour mettre en circulation le gaz de traitement sous pression qui est acheminé par la conduite 134 vers la conduite 128 d'alimentation de l'outil de coupe 122. On trouve également en relation avec la jupe d'étanchéité 130 un orifice d'extraction 136 raccordé à une conduite d'extraction 138 elle-même reliée à un extracteur d'air 140. L'extracteur d'air 140 est relié à un filtre 142 qui permet le rejet à l'atmosphère de l'air débarrassé des polluants.

Dans une phase initiale, l'outil de coupe 120 est descendu le long du mât 116 pour forer, malaxer et injecter le gaz dans le volume 114 initial. Ensuite, l'outil 120 étant maintenu dans sa position verticale d'enfoncement représentée sur la figure 3, il est déplacé horizontalement selon la direction de la flèche H par déplacement du porteur lui-même 112. On obtient ainsi de façon continue le traitement d'un volume de sol de forme sensiblement parallélépipédique rectangle ou constitué par la juxtaposition de parallélépipèdes rectangles raccordés entre eux correspondant au trajet du porteur.

Ce mode de réalisation est bien adapté au cas où le volume de terrain à traiter a une profondeur réduite. En effet, la longueur du support de la chaîne sans fin doit correspondre à la profondeur du terrain à traiter. Pour améliorer le malaxage du terrain découpé et son mélange avec l'agent de traitement, la chaîne sans fin peut comporter en plus des dents des organes favorisant le malaxage du sol.

Les agents de traitement gazeux utilisés sont bien sûr les mêmes que ceux qui ont été décrits en liaison avec l'équipement de la figure 1.

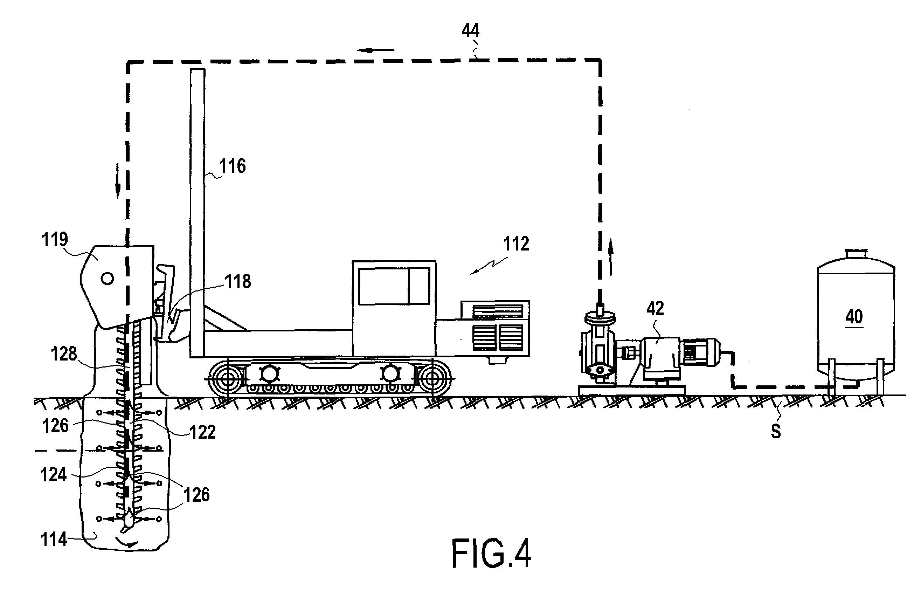

Sur la figure 4, on a représenté un équipement utilisant l'outil de coupe 120 dans le cas où l'agent de traitement est liquide. Les modifications par rapport à celui qui est représenté sur la figure 3 sont celles qui apparaissent déjà sur la figure 2. Les agents liquides de traitement sont ceux qui ont déjà été décrits en liaison avec la figure 2.

## Revendications

1. Procédé de réhabilitation de sols et/ou des eaux souterraines dans un volume de sol pollué, **caractérisé en ce qu'**il comporte les étapes suivantes :
- on déplace dans ledit volume un outil de forage apte à découper le sol et à le malaxer de manière homogène dans ledit volume ; ledit outil de forage étant choisi dans le groupe comprenant des outils de forage à axe de rotation horizontal et à déplacement vertical et des outils de forage à éléments de découpe à déplacement sensiblement vertical, le déplacement de l'outil étant horizontal ; et simultanément au malaxage ;
- on injecte dans le sol malaxé à l'aide dudit outil un agent de traitement de telle manière que, durant le malaxage, ledit agent de traitement soit dispersé de manière homogène dans le volume, ledit agent de traitement comprenant au moins un des agents suivants aptes à agir sur les éléments polluants :
- un fluide gazeux non uniquement chimiquement réactif;
- un agent réactif chimique constitué d'une substance chimique oxydante réductrice ou neutralisante ; et
- un agent réactif constitué de population de micro-organismes ou d'un substrat de développement de micro-organismes ;
par quoi on obtient une réhabilitation in situ du sol et/ou des eaux souterraines.

2. Procédé selon la revendication 1, **caractérisé en ce que** l'agent gazeux non uniquement chimiquement réactif est constitué par de l'air, de l'azote ou un gaz rare.

3. Procédé selon l'une quelconque des revendications 1 et 2, **caractérisé en ce que** ledit agent réactif chimique est gazeux, liquide ou solide.

4. Procédé selon l'une quelconque des revendications 1 à 3, **caractérisé en ce que** le volume de sols traités à la forme d'un parallélépipède rectangle ou d'une pluralité de parallélépipèdes rectangles reliés entre eux.

5. Procédé selon l'une quelconque des revendications 1 à 4, **caractérisé en ce qu'**une enveloppe d'étanchéité est disposée au-dessus de la surface du sol au droit de la zone en cours de traitement.

6. Equipement pour la réhabilitation de sols et/ou d'eaux souterraines dans un volume de sol pollué, **caractérisé en ce qu'**il comprend :
- une machine équipée d'un outil de forage pour découper dans ledit volume le sol et pour malaxer le sol de manière homogène dans ledit volume, ledit outil comprenant en outre des moyens pour injecter un agent de traitement de telle manière que durant le malaxage, ledit agent de traitement soit dispersé de manière homogène dans le volume ;
- des moyens pour alimenter en agent de traitement lesdits moyens d'injection ;
- des moyens pour déplacer ledit outil de forage ; et
- des moyens formant enveloppe d'étanchéité aptes à être disposés à la surface de sol en regard de la zone du sol en cours de traitement à l'aide de l'outil de forage, ledit outil de forage étant choisi dans le groupe comprenant des outils de forage à axe de rotation horizontal et à déplacement vertical et des outils de forage à éléments de découpe à déplacement sensiblement vertical, le déplacement de l'outil étant horizontal.

7. Equipement selon la revendication 6, **caractérisé en ce que** l'agent de traitement est gazeux et **en ce que** ladite enveloppe comporte en outre des moyens de soutirage des gaz s'échappant de la zone de terrain en cours de traitement.

8. Equipement selon l'une quelconque des revendications 6 et 7, **caractérisé en ce que** ledit outil de forage comprend deux paires de fraises rotatives à axes horizontaux.

9. Equipement selon l'une quelconque des revendications 6 et 7, **caractérisé en ce que** ledit élément de forage de l'outil de coupe est une chaîne sans fin sensiblement verticale portant des dents de découpe.
